Europäisches Patentamt

European Patent Office

Office européen des brevets

(11) Veröffentlichungsnummer: **0 026 475**
**A1**

## (12) EUROPÄISCHE PATENTANMELDUNG

(21) Anmeldenummer: **80105824.9**

(22) Anmeldetag: **25.09.80**

(51) Int. Cl.³: **G 11 B 17/02**
**G 11 B 3/62**

(30) Priorität: **02.10.79 DE 2939865**

(43) Veröffentlichungstag der Anmeldung:
**08.04.81 Patentblatt 81/14**

(84) Benannte Vertragsstaaten:
**AT BE CH DE FR GB IT LI LU NL SE**

(71) Anmelder: **Licentia Patent-Verwaltungs-GmbH**
**Theodor-Stern-Kai 1**
**D-6000 Frankfurt/Main 70(DE)**

(72) Erfinder: **Redlich, Horst, Ing. grad.**
**Plassstrasse 3a**
**D-1000 Berlin 37(DE)**

(72) Erfinder: **Ihlenburg, Rainer, Ing. grad.**
**Pariser Strasse 47**
**D-1000 Berlin 15(DE)**

(72) Erfinder: **Borchard, Heinz, Ing. grad.**
**Fr. Hebbelstrasse 31**
**D-2352 Nortorf(DE)**

(74) Vertreter: **Einsel, Robert, Dipl.-Ing.**
**Theodor-Stern-Kai 1**
**D-6000 Frankfurt/Main 70(DE)**

(54) **Zentrierung für einen plattenförmigen Aufzeichnungsträger.**

(57) Nach einer radialen Vorzentrierung über eine konusförmige Zentrierachse (1), erfolgt eine weitere radiale Zentrierung in einer zum Aufzeichnungsträger (1) senkrechten Richtung durch eine nachgebende Anordnung (4,6-9). Nach erfolgter Zentrierung wird der Aufzeichnungsträger (1) magnetisch (10,14) festgehalten.

Fig. 1

EP 0 026 475 A1

**0026475**
H 79/58

Licentia Patent-Verwaltungs-GmbH
Theodor-Stern-Kai 1

6000 Frankfurt/Main 70

Hannover, den 01.10.1979
UE2-Me/gn

## Zentrierung für einen plattenförmigen Aufzeichnungsträger

Die Erfindung betrifft eine Zentrierung für einen plattenförmigen Aufzeichnungsträger, bei der dieser in senkrechter
und waagerechter Richtung zentriert wird.

Es sind bereits plattenförmige Aufzeichnungsträger bekannt,
die in ihrem Zentrum eine Zentrierung zur zentrierten Lage
des Aufzeichnungsträgers während des Abspielvorganges besitzen. Im einfachsten Fall besteht die Zentrierung aus
einem Loch im Zentrum des Aufzeichnungsträgers. In dieses
Loch wird eine vorzugsweise konische Zentrierachse eingeführt, durch die der Aufzeichnungsträger in radialer Richtung zentriert wird. Die senkrechte Ausrichtung erfolgt
durch die Auflage auf dem Plattenteller. Bei einer Bild- oder
Tonplatte in Dichtspeichertechnik ist eine Zentrierung durch
eine konusförmige Achse nicht mehr ausreichend. Der Aufzeichnungsträger muß radial derart genau zentriert werden,
daß eine Exzentrizität von weniger als 0,02 mm nicht überschritten wird. Durch eine konusförmige in das Plattenzentrum eingepaßte Zentrierachse kann dieser extreme Bereich nicht mehr erreicht werden.

Um dennoch diese extreme Zentriergenauigkeit zu erreichen, werden Aufzeichnungsträger hergestellt, die eine Zentrierung besitzen, die sich auf der gleichen Seite befindet, an der auch die Information abgetastet wird. Dadurch ist die Zentrierung jeweils der abzuspielenden Seite angepaßt. Im Zentrum des Aufzeichnungsträgers ist dazu auf jeder Seite eine trapezförmige Erhebung angebracht, die genau zentrisch zu den auf der gleichen Seite befindlichen Aufzeichnungsrillen angeordnet ist. Der Aufzeichnungsträger selbst wird während des Abspielvorganges durch einen Magneten, der in Wirkverbindung mit einem in den Aufzeichnungsträger eingelassenen Metallring steht, auf dem Plattenteller festgehalten. Die senkrechte Ausrichtung zur Abspielebene des Aufzeichnungsträgers wird durch die Auflage auf dem Plattenteller bewirkt.
Da zum Zentrieren des Aufzeichnungsträgers zwei Zentriervorgänge notwendig sind, nämlich radiale und senkrechte Ausrichtung können diese Vorgänge sich leicht gegenseitig stören. Es ist notwendig, daß der Aufzeichnungsträger zunächst radial, dann auf dem Plattenteller senkrecht ausgerichtet wird. Dies ist auch bei einer Führung durch eine konusförmige Achse in einem Zentrierloch der Fall.

Wegen der radialen Zentrierung durch eine trapezförmige Erhebung auf der der Abspielseite zugeordneten Seite ist ein radiales Zentrieren auf dieser Seite erforderlich. Ein Hindurchführen einer konischen Zentrierung ist nicht ausreichend. Senkrechte und radiale Zentrierungen müßten gleichzeitig erfolgen. Dies hätte eine Doppelpassung zur Folge, die sich als mangelhafte Zentrierung auswirken könnte.

Es ist Aufgabe der Erfindung, bei einem Aufzeichnungsträger mit auf der Abspielseite befindlicher Zentrieranordnung eine Zentriermöglichkeit anzugeben, die eine aufeinanderfolgende radiale und senkrechte Ausrichtung ohne gegenseitige Beeinflussung ermöglicht.

Die Erfindung wird durch die im Anspruch 1 beschriebenen
Maßnahmen gelöst. Weitergehende Maßnahmen nach der Erfindung
sind in den Unteransprüchen beschrieben.

Durch die Erfindung wird es ermöglicht, daß zunächst eine
radiale Zentrierung des Aufzeichnungsträgers erfolgt, dann
erst die senkrechte Ausrichtung. Der Federweg des Zentrierringes ist dabei so bemessen, daß die Anziehungskraft des
Magnetringes während jedes Punktes des radialen Zentrierweges
jeweils größer ist als die Federkräfte der Federn. Durch entsprechende Bemessung des Abstandes zwischen Magnetring und
Aufzeichnungsträger kann die Haltekraft den Anforderungen
entsprechend eingestellt werden. Durch eine konusförmige
Achse erfolgt eine Vorzentrierung. Die Erfindung erlaubt eine
sehr genaue und präzise Zentrierung des Aufzeichnungsträgers,
wie sie für Bildplatten und nach dem Druckabtastverfahren
hergestellte Tonplatten erforderlich ist.

Die Erfindung wird nachstehend an Hand von Zeichnungen näher
beschrieben. Es zeigen:
Fig. 1 einen Querschnitt durch eine Zentriervorrichtung mit
       einem darüber befindlichen Aufzeichnungsträger,
Fig. 2 einen Zentrierring in perspektivischer Ansicht,
Fig. 3 ein Diagramm zur Erläuterung des Haltevorganges.

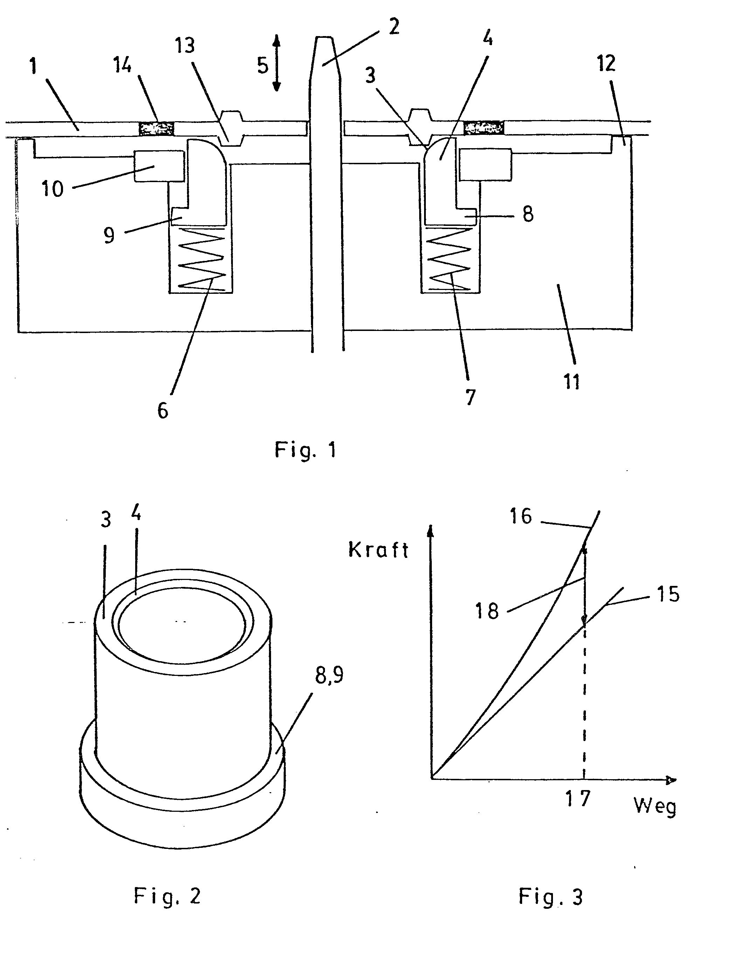

Fig. 1 zeigt einen Schnitt durch eine Zentrierung nach der
Erfindung. Beim Auflegen eines Aufzeichnungsträgers 1 auf
ein Abspielgerät wird dieser zunächst durch die leicht
konusförmige Achse 2 radial vorzentriert. Die eigentliche
radiale genaue Zentrierung erfolgt durch einen an der oberen
Innenkante 3 abgerundeten Ring 4. Dieser ist in senkrechter
Richtung 5 frei beweglich. Durch eine oder mehrere unterhalb
des Umfangs des Ringes 4 angeordnete Federn 6 und 7 wird der
Ring 4 im Ausgangszustand in einer oberen Stellung gehalten, die durch die Anschläge 8 und 9 des Ringes 4 gegen einen
Magnetring 10 nach oben begrenzt ist. Der Magnetring 10 ist
in den Träger 11 in einem Abstand von vorzugsweise 1 mm von
einem über einen Auflagering 12 gelegten Aufzeichnungsträger
eingelassen. Ein aufgelegter plattenförmiger Aufzeichnungsträger liegt daher nur auf dem Auflagering 12, nicht jedoch
auf dem Magnetring 10 auf, von dem er durch den Abstand von
etwa 1 mm getrennt bleibt.

Nachdem der plattenförmige Aufzeichnungsträger 1 durch die
Achse 2 vorzentriert ist, wird er mit seiner dammartigen Erhöhung 13 auf die abgerundete Kante 3 des Ringes 4 gelegt.
Jetzt erfolgt die eigentliche Zentrierung, da die Erhöhung
13 des Aufzeichnungsträgers 1 genau zentrisch den Aufzeichnungsrillen zugeordnet ist. Der Aufzeichnungsträger wird nun zusammen mit dem Ring 4 gegen die Kraft der Federn 6 und 7 von
dem Magnetring 10 weiter nach unten gezogen. Der Ring 4 muß
sehr genau ohne Toleranzen im Träger 11 geführt sein, anderenfalls gäbe es radiale Zentrierfehler.

In Fig. 2 ist der Zentrierring 4 noch einmal perspektivisch
dargestellt.

Fig. 3 zeigt ein Diagramm zur Erläuterung der Wirkungsweise
der Zentrierung. Da eine Federkraft direkt proportional dem
zurückgelegten Weg ist, nimmt die Federkraft mit zunehmendem
Weg zu. Im Diagramm von Fig. 3 kennzeichnet die Gerade 15
eine Federkennlinie. Durch den in den Träger 11 eingelassenen
Magnetring 10 soll der Aufzeichnungsträger 1 mit dem eingelassenen Metallring 14 festgehalten werden. Dies ist nur
dann möglich, wenn die Haltekraft des Magnetringes 10 größer
ist als die dieser Kraft entgegengerichtete Federkraft der
Federn 6 und 7. Das der Federkraft entgegenstehende Eigengewicht des Aufzeichnungsträgers 1 und des Ringes 4 seien hier
vernachlässigt.

0026475
H 79/58

Eine Magnetkennlinie hat in erster Näherung eine annähernd quadratische Form, d.h. die Haltekraft eines Magneten nimmt quadratisch mit der Annäherung an den Magneten zu. Im Diagramm in Fig. 3 kennzeichnet die Kurve 16 die Kennlinie des Magnetringes 10. Es ist ersichtlich, daß zunächst die Federkraft nur wenig kleiner als die Anziehungskraft des Magnetringes 10 ist. Wegen der steilen Konuskante der Zentrierung des Aufzeichnungsträger von $> 45°$ erfolgt die radiale Zentrierung, bevor die Haltekraft des Magnetringes 10 so groß ist, daß der Aufzeichnungsträger schlüssig auf dem Auflagering 12 aufliegt. Die seitliche Verschiebekraft ist also bis kurz vor dem Punkt 17 größer als die Anziehungskraft des Magnetringes 10. Dabei darf die Haltekraft des Magnetringes 10 erst dann größer als die seitliche Verschiebekraft sein, wenn auch eine nicht parallel zum Auflagering 12 aufgelegte Platte radial zentriert ist und allseitig auf dem Auflagering 12 aufliegt. Die radiale Zentrierung des Aufzeichnungsträgers muß innerhalb der Wegstrecke bis Punkt 17 beendet sein. Am Punkt 17 hält sich der Aufzeichnungsträger über die Differenzkraft 18 selbst fest.

Der Weg des Aufzeichnungsträgers 1 ist durch den Auflagering 12 begrenzt, um die Magnetkraft nicht zu groß werden zu lassen, da anderenfalls Schwierigkeiten beim Lösen des Aufzeichnungsträgers auftreten. Durch einen definierten Auflagering 12 läßt sich auch eine verbesserte senkrechte Zentrierung erreichen.

0026475

H 79/58

## Patentansprüche

1. Zentrierung für einen plattenförmigen Aufzeichnungsträger, bei der aufeinanderfolgend eine Zentrierung in radialer Richtung des Aufzeichnungsträgers und eine Zentrierung in auf dem Aufzeichnungsträger senkrecht stehender Richtung erfolgt, dadurch gekennzeichnet, daß nach einer radialen Vorzentrierung über eine an sich bekannte konusförmige Zentrierachse (1) eine weitere radiale Zentrierung durch eine in einer zum Aufzeichnungsträger senkrechten Richtung (5) nachgebende Anordnung (4) erfolgt, und daß der Aufzeichnungsträger nach erfolgter Zentrierung magnetisch gehalten wird.

2. Zentrierung nach Anspruch 1, dadurch gekennzeichnet, daß die weitere Zentrierung aus einem unter Federkraft (6 und 7) stehenden Ring (4) besteht.

3. Zentrierung nach Anspruch 2, dadurch gekennzeichnet, daß der Ring (4) einer Zentrieranordnung (13) des Aufzeichnungsträgers (1) angepaßt ist.

4. Zentrierung nach Anspruch 2, dadurch gekennzeichnet, daß die Federkonstanten und der Federweg der Federn (6 und 7) der weiteren radialen Zentrierung so bemessen sind, daß die weitere radiale Zentrierung vor dem Wegpunkt (17) erfolgt ist, an dem die magnetische Kraft der magnetischen Haltevorrichtung (10) den Aufzeichnungsträger festhält.

5. Zentrierung nach Anspruch 1, dadurch gekennzeichnet, daß während des Anziehungsweges des Aufzeichnungsträgers die Kraft zur radialen Verschiebung größer ist als die Anziehungskraft der magnetischen Haltevorrichtung (10).

6. Zentrierung nach Anspruch 5, dadurch gekennzeichnet, daß die Kraft zur radialen Verschiebung durch die Differenzkraft zwischen der Federkraft der Federn (6 und 7) und der Anziehungskraft der magnetischen Haltevorrichtung (10) über die abgerundete Kante des Zentrierringes (4) und der konusförmigen Zentrierung des Aufzeichnungsträgers erfolgt.

7. Zentrierung nach Anspruch 6, dadurch gekennzeichnet, daß die Außenkante der konusförmigen Zentrierung einen Winkel von vorzugsweise 45° gegenüber einer auf dem Aufzeichnungsträger stehenden Senkrechten einnimmt.

8. Zentrierung nach Anspruch 1, dadurch gekennzeichnet, daß die Wegstrecke zur Zentrierung des Aufzeichnungsträgers (1) durch einen Auflagering (12) zur Zentrierung des Aufzeichnungsträgers (1) in einer auf dem Aufzeichnungsträger (1) senkrecht stehenden Richtung (5) begrenzt ist.

9. Zentrierung nach Anspruch 5, dadurch gekennzeichnet, daß ein auf dem Auflagering (12) aufliegender Aufzeichnungsträger einen bestimmten Abstand, vorzugsweise 1 mm, von dem den Aufzeichnungsträger haltenden Magnetring (10) einhält.

10. Zentrierung nach Anspruch 1, dadurch gekennzeichnet, daß der Zentrierring (4) mit zugehörigen Federn (6 und 7) sowie der Magnetring (10) in einen Träger (11) eingelassen sind, der fest mit der Achse (2) verbunden ist.

Fig. 1

Fig. 2

Fig. 3

**0026475**

Nummer der Anmeldung

EP 80 10 5824

Europäisches Patentamt

**EUROPÄISCHER RECHERCHENBERICHT**

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich der maßgeblichen Teile | betrifft Anspruch | |
| | FR - A - 2 373 933 (LAINEZ, FICHOT) <br> * Seite 6, Zeile 22 bis Seite 7, Zeile 17; Seite 8, Zeilen 24-27; Seite 9, Zeilen 5-19; Figuren 1-3 * <br><br> -- <br><br> FR - A - 2 408 896 (MAGNETIC PERI-PHERALS INC.) <br> * Seite 5, Zeilen 26-35; Seite 6, Zeilen 31-38; Seite 9, Zeile 9 bis Seite 10, Zeile 5; Figuren 2,3 * <br> & DE - A - 2 840 755 | 1,7 <br><br><br><br><br><br><br> 1,7,8 | G 11 B 17/02 <br> G 11 B 3/62 |
| | | | **RECHERCHIERTE SACHGEBIETE (Int. Cl.³)** |
| A | -- <br><br> US - A - 2 904 869 (MARTEL) <br> * Spalte 4, Zeilen 8-16; Figuren 1,2 * | 9 | G 11 B 17/02 <br> G 11 B 3/62 |
| P | -- <br><br> DE - A - 2 821 296 (BORCHARD) <br> * Seite 5, Zeile 27 bis Seite 7, Zeile 30; Figuren 1-5 * <br><br> ----- | 1,6-10 | |

Der vorliegende Recherchenbericht wurde für alle Patentansprüche erstellt.

| Recherchenort | Abschlußdatum der Recherche | Prüfer |
|---|---|---|
| Den Haag | 16-12-1980 | SANDRI |

EPA form 1503.1 06.78